# EUROPEAN PATENT APPLICATION

(11) **EP 4 733 445 A1**
(43) Date of publication of application: **29.04.2026**
(21) Application number: 25192975.8
(22) Date of filing: 31.07.2025
(51) Int. Cl.: C25B 11/031, C25B 11/053, C25B 1/04

(54) **HIERARCHICAL POROUS NICKEL ELECTRODE AND METHOD FOR PREPARING THE SAME**

(30) Priority: 23.10.2024 CN 202411479653; 26.12.2024 CN 202411939655
(71) Applicant: Baoshi Lai New Materials Technology (Suzhou) Co., Ltd, Suzhou City Jiangsu 215552 (CN)
(72) Inventor: LI, Feng, Suzhou City, Jiangsu Province,, 215552 (CN); WANG, Bo, Suzhou City, Jiangsu Province, 215552 (CN); ZHANG, Weitao, Suzhou City, Jiangsu Province, 215552 (CN); WU, Rongfang, Suzhou City, Jiangsu Province, 215552 (CN); HUANG, Qian, Suzhou City, Jiangsu Province, 215552 (CN); ZHANG, Yu, Suzhou City, Jiangsu Province, 215552 (CN); MENG, Xiangrui, Suzhou City, Jiangsu Province, 215552 (CN); MENG, Xianglin, Suzhou City, Jiangsu Province, 215552 (CN)
(74) Representative: Santarelli

(57) **Abstract**

The present invention discloses a hierarchical porous nickel electrode and a method for preparing the same. The method includes: spraying a nickel-aluminum material on a nickel substrate to prepare a nickel-aluminum coating on the surface of the nickel substrate, to obtain a first intermediate product, the first intermediate product including the nickel substrate and the nickel-aluminum coating; heat-treating the first intermediate product, to obtain a second intermediate product; placing the second intermediate product into alkaline solutions of different concentrations for stepwise activation sequentially, to obtain a hierarchical porous nickel electrode. In the stepwise activation, the concentrations of the alkaline solution are gradually decreased, and activation temperatures are gradually decreased. The hierarchical porous nickel electrode of this invention ensures high mass transfer rates and catalytic efficiency. The coating has strong bonding strength with the substrate, stable interlayer structure, good mechanical properties, stability, and long service life.

## Description

The present invention claims the priority of China patent application No. 202411479653.2, filed in Chinese Patent Office on October 23, 2024, and entitled "Nickel-Based Catalyst with Gradient Pore Structure and Method For Preparing The Same", and the priority of China patent application No. 202411939655.5, filed in Chinese Patent Office on December 26, 2024, and entitled "Method For Preparing Hierarchical Porous Nickel Electrode By Stepwise Dealloying and Its Application", the entire contents of these two applications are herein incorporated by reference.

### Technical Field

The present invention relates to the technical field of alkaline water electrolysis technology, in particular to a hierarchical porous nickel electrode and method for preparing the same.

### Background of the Invention

Hydrogen production through water electrolysis utilizes direct current (DC) to spilt water into oxygen (at the anode) and hydrogen (at the cathode), with no carbon consumption or generation throughout the process, making it a promising trend for the future development of the energy industry. Most electrodes commonly employed in electrolysis are fabricated using methods such as spraying, electroplating, and chemical plating. These electrodes typically possess a homogeneous porous structure. However, electrodes with a homogeneous macroporous structure suffer from a shortage of active sites, which is difficult to meet the requirement of electrocatalytic efficiency. On the other hand, electrodes with a homogeneous microporous structure are not conducive to gas diffusion and have poor gas evacuation effect, which cause bubble obstruction effect. The obstruction of bubbles further leads to an increase of the internal pressure resulting in the catalyst detachment, which lowers the stability of the electrodes, and the attachment of bubbles passivates active sites and increases the diffusion resistance.

To overcome the drawbacks of homogeneous macroporous and homogeneous microporous electrodes, hierarchical porous electrodes, which incorporate both macropores and micropores, have emerged as the current main research focus. Nonetheless, the existing methods for preparing hierarchical porous electrodes mainly rely on binders, mechanical bonding, stepwise electrodeposition, etc., in which the binder or mechanical bonding combines multiple porous materials with different characteristics. The preparation process is complicated, and long-term use leads to a decline in the load-bearing capacity of the graded porous material, and the catalyst layer is prone to detachment. The hierarchical porous materials prepared by stepwise electrodeposition have the problem of low bonding strength between layers, and the waste electrolyte is difficult to handle, the preparation process is complicated.

### Summary of the Invention

The present invention aims to provide a hierarchical porous nickel electrode and a preparation method and application thereof, in order to address the issues in the in the conventional technology of hierarchical porous electrodes, such as the complex preparation process, the long-term reduction of load-bearing capacity, the easy detachment of the catalyst layer, and the low adhesion strength between layers.

To achieve the foregoing objects, a first aspect of the present invention provides a method for preparing a hierarchical porous nickel electrode, comprising the following steps: spraying a nickel-aluminum material on a nickel substrate to prepare a nickel-aluminum coating on the surface of the nickel substrate, so as to obtain a first intermediate product, the first intermediate product including the nickel substrate and the nickel-aluminum coating; heat-treating the first intermediate product, to obtain a second intermediate product; and placing the second intermediate product into alkaline solutions of different concentrations sequentially for stepwise activation, to obtain a hierarchical porous nickel electrode. In the stepwise activation, the concentrations of the alkaline solution are gradually decreased, and activation temperatures are gradually decreased.

In one or more embodiments of the present invention, the stepwise activation comprises the following steps: the second intermediate product is placed in a first alkaline solution for a first activation, to obtain a third intermediate product; and the third intermediate product is placed in a second alkaline solution for a second activation, to obtain a hierarchical porous nickel electrode. A concentration of the first alkaline solution is greater than a concentration of the second alkaline solution, and an activation temperature of the first activation is higher than an activation temperature of the second activation.

In one or more embodiments of the present invention, the first alkaline solution comprises 23~40 wt% NaOH solution, the activation temperature of the first activation is 60~100°C, and an activation time is 0~2 h. The second alkaline solution comprises 4~22 wt% NaOH solution, the activation temperature of the second activation is 30~60°C, and an activation time is 8~24 h.

In one or more embodiments of the present invention, each of the first alkaline solution and the second alkaline solution further comprises 1 to 8 wt% of an additive, the additive is selected from the group of sodium dodecyl sulfate, sodium dodecyl benzene sulfonate, sodium gluconate, sodium citrate, sodium tartrate, and combinations thereof.

In one or more embodiments of the present invention, the step of spraying a nickel-aluminum material on a nickel substrate comprises: adopting a plasma spraying process to spray a nickel-aluminum material on the nickel substrate with nickel-clad aluminum powder as a spraying powder.

In one or more embodiments of the present invention, the step of spraying a nickel-aluminum material on a nickel substrate comprises: (i) cladding a first alloy powder on a surface of the nickel substrate; (ii) cladding a second alloy powder on a surface of a product of step (i); (iii) cladding a third alloy powder on a surface of a product of step (ii). The first alloy powder, the second alloy powder and the third alloy powder are NiAl alloy powder; a mass ratio of Ni and Al in said NiAl alloy powder is (1~9) : (1~9); a particle size of the first alloy powder is 1~10 µm, a particle size of the second alloy powder is 10~50 µm, a particle size of the third alloy powder is 50~100 µm; the first alloy powder is made of micrometer particles of a smaller size, the second alloy powder is made of secondary micrometer particles, and the third alloy powder is made of micrometer particles of a larger size as compared to the second alloy powder..

In one or more embodiments of the present invention, a D50 of the first alloy powder is 3~8 µm, a D50 of the second alloy powder is 25~50 µm, and a D50 of the third alloy powder is 75~110 µm.

In one or more embodiments of the present invention, the cladding is laser cladding. In step (i), a power of laser cladding is 800~2000 W, a flow rate of a nitrogen protective gas is 5~10 L/min, a spot diameter is 4 mm, a scanning speed is 4 mm/s, and a powder feeding rate is 0.05~0.3 g/s. In step (ii), a power of laser cladding is 1000~2000 W, a flow rate of a nitrogen protective gas is 5~10 L/min, a spot diameter is 6 mm, a scanning speed is 6 mm/s, and a powder feeding rate is 0.05~0.3 g/s. In step (iii), a power of laser cladding is 1000~3000 W, a flow rate of a nitrogen protective gas is 5~10 L/min, a spot diameter is 4 mm, a scanning speed is 10 mm/s, a powder feeding rate is 0.05~0.3 g/s.

In one or more embodiments of the present invention, a thickness of the nickel-aluminum coating is 40-50 µm.

In one or more embodiments of the present invention, before the step of spraying a nickel-aluminum material on a nickel substrate, the method further comprises roughing up a surface of the nickel substrate using a sandblasting process.

In one or more embodiments of the present invention, the step of heat-treating the first intermediate product comprises: placing the first intermediate product in a hydrogen atmosphere and heat treating it at 550-650°C for 1-2 h, then the first intermediate product is cooled to room temperature at a rate of 3-5 °C/min.

To achieve the foregoing objects, a second aspect of the present invention provides a hierarchical porous nickel electrode obtained by using the method in any one of above embodiments.

To achieve the foregoing objects, a third aspect of the present invention provides an application of the hierarchical porous nickel electrode in any one of the above embodiments as a hydrogen precipitation electrode in an alkaline electrolytic water reaction.

Compared with the prior art, the beneficial effects of the present invention are shown below:
The hierarchical porous nickel electrode of the present invention has a hierarchical porous structure ranging from nanometer to micrometer, and the micropores and mesopores can provide reaction sites or capillary forces for the catalyst, while the macropores promote the diffusion of gases or fluids through the interconnected skeleton, which ensures a highly efficient mass-transfer rate and catalytic efficiency.

The hierarchical porous nickel electrode of the present invention reduces the overpotential at -500 mA/cm² by 52.4% and increases the capacitance of the double electric layer by 7.97 times, compared with the conventional homogeneous-level porous nickel electrode.

The hierarchical porous nickel electrode of the present invention has strong bonding strength between the coating and the substrate, stable interlayer structure, excellent mechanical properties, good stability, long service life, and basically no change in the overpotential after a long period of time running at -500 mA/cm² for 1000 h.

The hierarchical porous nickel electrode of the present invention only requires stepwise activation to realize the construction of the hierarchical porous structure, which significantly simplifies the preparation process compared with the prior art.

### Brief Description of the Drawings

FIG. 1 is a flow chart of a method for preparing a hierarchical porous nickel electrode according to an embodiment of the present invention.
FIG. 2 is a flow diagram corresponding to S300 in FIG. 1.
FIG. 3 is a surface SEM image of a hierarchical porous nickel electrode according to Example 2 of the present invention.
FIG. 4 is a cross-sectional SEM image of a hierarchical porous nickel electrode prepared in Example 2 of the present invention.
FIG. 5 is a LSV curve of the electrodes prepared in Examples 2, 5, 6 and Comparative examples 3 and 4 of the present invention.
FIG. 6 is a double-layer capacitance curve of the electrodes prepared in Examples 2, 5, 6 and Comparative examples 3 and 4 of the present invention, Cdl is double-layer capacitance, R2 is the linear regression coefficient.
FIG. 7 is a stability test curve of the electrodes prepared in Examples 2 and Comparative examples 3 and 4 of the present invention.

### Detailed Description of Embodiments

The activity of typical nickel-based catalysts derives from the catalytic properties of nickel itself and its porous structure. The traditional nickel-based catalysts have a homogeneous porous structure. The homogeneous macroporous electrode has a small active site, which is not favorable to improve the catalytic efficiency. The homogeneous microporous electrode has poor gas evacuation effect and bubble obstruction effect, which is easy to lead to catalyst detachment and diffusion resistance increase, and low utilization of active sites.

Compared with nickel-based catalysts with a homogeneous porous structure, hierarchical porous nickel-based catalysts not only have a high specific surface area to ensure the catalytic efficiency, but also have enough bubble transport channels to reduce the contact area between bubbles and electrodes, accelerate bubble shedding, and improve the service life of nickel-based catalysts. However, the traditional hierarchical porous nickel-based catalysts have the problems of poor interlayer bonding strength, reduced load-bearing capacity for long-time use, uneven coating thickness, and complicated preparation process due to the limitation of the preparation process.

To solve the above problems, the inventors of the present invention have developed a novel method for preparing a hierarchical porous nickel electrode, which can effectively simplify the preparation process and reduce the preparation cost under the premise of ensuring the catalytic efficiency of the electrode, and significantly improve the interlayer bonding strength and the service life of the electrode.

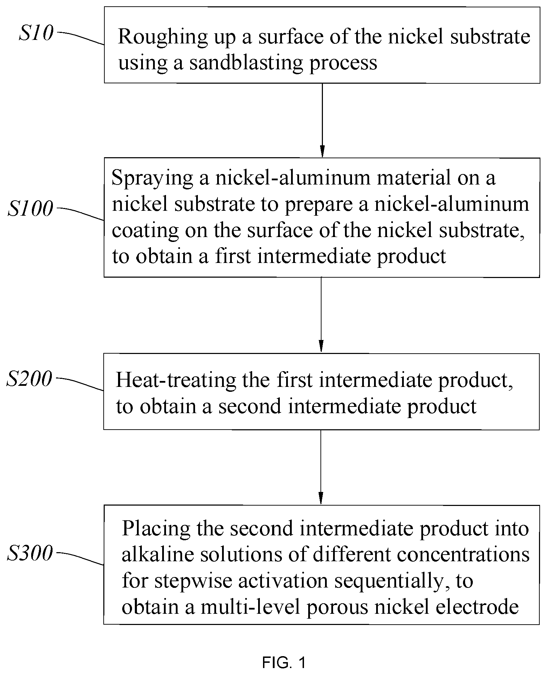

Specifically, referring to FIG. 1, FIG. 1 is a flow chart of a method for preparing hierarchical porous nickel electrodes according to an embodiment of the present invention.

As shown in FIG. 1, the method includes the following steps.

At S100, a nickel-aluminum material is sprayed on a nickel substrate to prepare a nickel-aluminum coating on the surface of the nickel substrate to obtain a first intermediate product. The first intermediate product includes the nickel substrate and the nickel-aluminum coating.

In one embodiment, the nickel-based substrate may be a nickel mesh, and in other embodiments, the nickel-based substrate may also be a base material for conventional nickel electrodes, such as nickel foam, all of which are capable of realizing the same effect.

In one embodiment, the step of spraying the nickel-aluminum material is to spray the nickel-aluminum material on a surface of a nickel-based substrate by a plasma spraying process using a nickel-clad aluminum material as the spraying powder.

The parameters of the plasma spraying process and the specific material ratio of the nickel-clad aluminum material are not limited, as long as the spraying of nickel-aluminum material can be done.

Exemplarily, when Ni₇₅Al₂₅ nickel-clad aluminum powder of 30~50 µm is used as the spraying powder, the plasma arc power can be 33 kW, the nozzle diameter can be 1 mm, the spraying distance can be 150 mm, the spraying angle can be 60°, and the gas pressure can be 0.4 MPa. When other types of nickel-clad aluminum powder are used as the raw material, the parameters of plasma spraying can be adjusted accordingly based on the actual working conditions, and the similar effect can be realized.

In another embodiment, the method of spraying a nickel-aluminum material may be stepwise spraying, comprising the following steps.
(i) a first alloy powder is cladded on a surface of the nickel substrate.
(ii) a second alloy powder is cladded on a surface of a product of step (i).
(iii) a third alloy powder is cladded on a surface of a product of step (ii).

The first alloy powder, the second alloy powder and the third alloy powder are NiAl alloy powder. A mass ratio of Ni and Al in the NiAl alloy powder is (1~9) : (1~9). A particle size of the first alloy powder is 1~10 µm. A particle size of the second alloy powder is 10~50 µm. A particle size of the third alloy powder is 50-100 µm. The first alloy powder is made of micrometer particles of a smaller size, the second alloy powder is made of secondary micrometer particles, and the third alloy powder is made of micrometer particles of a larger size as compared to the second alloy powder.

In one embodiment, the D50 of the first alloy powder is 3~8 µm, the D50 of the second alloy powder is 25~50 µm, and the D50 of the third alloy powder is 75~110 µm.

In one embodiment, the cladding is laser cladding. In step i, a power of laser cladding is 800~2000 W, a flow rate of a nitrogen protective gas is 5~10 L/min, a spot diameter is 4 mm, a scanning speed is 4 mm/s, and a powder feeding rate is 0.05~0.3 g/s.

At step (ii), a power of laser cladding is 1000~2000 W, a flow rate of a nitrogen protective gas is 5~10 L/min, a spot diameter is 6 mm, a scanning speed is 6 mm/s, and a powder feeding rate is 0.05~0.3 g/s.

At step (iii), a power of laser cladding is 1000~3000 W, a flow rate of a nitrogen protective gas is 5~10 L/min, a spot diameter is 4 mm, a scanning speed is 10 mm/s, and a powder feeding rate is 0.05~0.3 g/s.

The laser cladding employs a stacked spray strategy. Firstly, smaller particle size micrometer catalyst particles are cladded on the nickel substrate; secondly, secondary particle size micrometer catalyst particles are cladded on the coating; and finally, larger particle size micrometer catalyst particles are cladded. The purpose of the laser cladding stacked spraying adopted in the present invention is to form a special gradient porous structure by hierarchically adhering the catalyst particles of different particle sizes to the surface of the nickel substrate.

In one embodiment, a thickness of the nickel-aluminum coating is 40-50 µm.

At S200, the first intermediate product is heat-treated to obtain a second intermediate product.

It is to be understood that a nickel-aluminum coating is deposited on the surface of the nickel substrate of the first intermediate product, and after further heat treatment, the nickel and aluminum diffuse into each other to form an alloy phase.

In one embodiment, the heat treatment may be specifically as follows: the first intermediate product is placed in a hydrogen atmosphere and heat treated at 550-650°C for 1~2 h, after which it is cooled to room temperature at a rate of 3~5 °C/min.

At S300, the second intermediate product is placed into alkaline solutions of different concentrations for stepwise (step-by-step) activation sequentially, to obtain a hierarchical porous nickel electrode.

In the stepwise activation, the concentrations of the alkaline solution are gradually decreased, and activation temperatures are gradually decreased.

The hierarchical porous structure is constructed by stepwise activation in the present invention. Specifically, the concentration of the alkaline solution and the activation temperature can be decreased gradually. Firstly, the second intermediate product is activated at a higher concentration of alkaline solution and a higher temperature, followed by the activation at a lower concentration of alkaline solution and a lower temperature, and the hierarchical porous structure is constructed by stepwise activations.

In the second intermediate product, there are Al, NiAl₃, Ni₂Al₃, NiAl, Ni₃Al, Ni and other nickel-aluminum intermetallic compounds, and in accordance with the removal difficulty in the alkaline solution in the following order: Al>NiAl₃>Ni₂Al₃>NiAl>Ni₃Al. With a high alkaline solution concentration and a high temperature, the second intermediate product is corroded in a large area with a fast corrosion rate, and is prone to form macropores in the hierarchical porous structure. With a low alkaline solution concentration and a low temperature, the second intermediate product is corroded in a small area with a slow corrosion rate, and is prone to form micropores in the hierarchical porous structure, thereby forming a hierarchical porous structure.

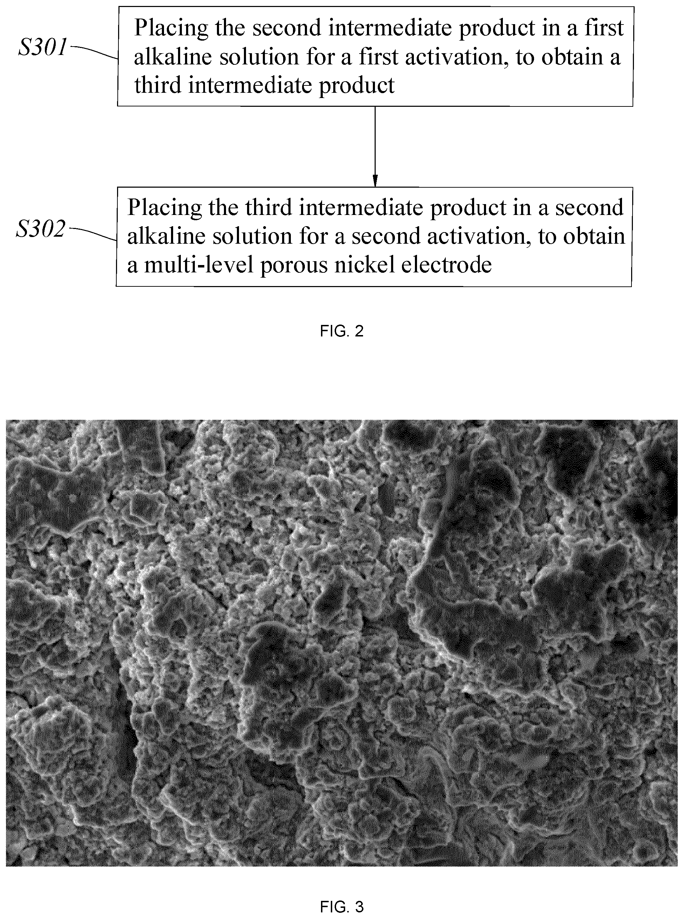

In one embodiment, the stepwise activation may be a two-step activation, and specifically, referring to FIG. 2, FIG. 2 is a schematic flow diagram corresponding to S300 in FIG. 1.

As shown in FIG. 2, the stepwise activation includes the following steps S301 to S302.

At S301, the second intermediate product is placed in a first alkaline solution for a first activation, to obtain a third intermediate product. At S302, the third intermediate product is placed in a second alkaline solution for a second activation, to obtain a hierarchical porous nickel electrode.

In these two steps, the concentration of the first alkaline solution is greater than a concentration of the second alkaline solution, and an activation temperature of the first activation is higher than an activation temperature of the second activation.

In one embodiment, the first alkaline solution comprises 23~40 wt% NaOH solution, the activation temperature of the first activation is 60~100°C, and an activation time is 0~2 h. The second alkaline solution comprises 4~22 wt% NaOH solution, the activation temperature of the second activation is 30~60°C, and an activation time is 8~24 h.

To ensure activation efficiency and stability, each of the first alkaline solution and the second alkaline solution further comprise 1~8 wt% of an additive. The additive is selected from the group of sodium dodecyl sulfate, sodium dodecyl benzene sulfonate, sodium gluconate, sodium citrate, sodium tartrate, and combinations thereof.

Please continue to refer to FIG. 1. In order to improve the bonding area and adhesion of the nickel-aluminum coating in S100, the following step S10 is performed before S100.

At S10, a surface of the nickel substrate is roughed up by using a sandblasting process.

It is understood that by performing a sandblasting process on a nickel substrate, stains on the surface of the substrate can be removed, and, more importantly, on the other hand, the surface of the substrate can be made to have a different roughness so as to increase the bonding area between the subsequent nickel-aluminum coating and the nickel substrate, as well as to improve the adhesion of the nickel-aluminum coating.

In one embodiment, the sandblasting process may use 80 mesh white corundum, the sandblasting distance may be 120 mm, the sandblasting angle may be 60~90°, and the sandblasting gas pressure may be 0.4 MPa.

In other embodiments, the parameters of the sandblasting process can also be adjusted based on actual working conditions, as long as the surface roughening of the nickel base substrate can be achieved.

It should be noted that the above step achieves the construction of a hierarchical porous structure by two-step activation, and in other embodiments, the number of activation times can be adjusted based on the actual working conditions, for example, three-step activation, four-step activation, and so on. And the concentration of the alkaline solution and the activation temperature of each activation can be adjusted accordingly based on the actual needs to achieve the same effect.

It is understandable that, since different porous structures are prepared by stepwise activation of the same coating, the hierarchical porous nickel electrodes prepared by the above-mentioned embodiments have stable interlayer structures, excellent mechanical properties, good stability, and long service life. In addition, during the thermal spraying of nickel-aluminum materials, an exothermic reaction between nickel and aluminum occurs, which can continue for 0.003~0.005 s after the powder reaches the substrate surface, thereby producing a strong micro-metallurgical bonding effect between the coating and the substrate. Therefore, the surface catalyst layer of the hierarchical porous nickel electrode of the present invention also has a strong bonding strength with the substrate.

The electrodes prepared using the above-mentioned methods have a hierarchical porous structure ranging from nanometers to micrometers. The micropores and mesopores can provide reaction sites or capillary forces for the catalyst, while the macropores promote the diffusion of gases or fluids through the interconnected framework, ensuring efficient mass transfer rates and catalytic efficiency. In particular, the above method only requires stepwise activation to achieve the construction of a hierarchical porous structure, which significantly simplifies the preparation process compared to the prior art.

The effects of the present invention are further illustrated in detail below with reference to specific embodiments.

### Example 1

A hierarchical porous nickel electrode is prepared using the following steps I to IV.

At step I, a 160 mm×160 mm nickel mesh is taken as the nickel base substrate, and a sandblasting technology is used to roughen the surface of the nickel-based substrate. An 80-mesh white corundum is used for sandblasting. A sandblasting distance is 120 mm, a sandblasting angle is 70°, and a sandblasting gas pressure is 0.4 MPa.

At step II, a nickel-aluminum powder with a particle size of 30~50 µm (Ni₇₅Al₂₅) is used as the spray powder. The nickel-aluminum material is sprayed onto the nickel-based substrate by using plasma spraying technology to form a nickel-aluminum coating with a thickness of 50 µm. The plasma arc power is 33 kW, the nozzle diameter is 1 mm, the spraying distance is 150 mm, the spraying angle is 60°, and the gas pressure is 0.4 MPa.

At step III, the sprayed nickel-based substrate is placed in a hydrogen atmosphere for heat treatment at 610°C for 1 hour, followed by cooling to room temperature at a rate of 3 °C/min.

At step IV, the nickel-based substrate is placed in the first alkaline solution and activated at 90°C for 0.5 h; then, the nickel-based substrate is placed in the second alkaline solution and activated at 60°C for 8 h, removed, rinsed clean, and dried to obtain a hierarchical porous nickel electrode.

The first alkaline solution is a 30 wt% sodium hydroxide solution containing 3 wt% sodium dodecyl sulfate; and the second alkaline solution is an 18 wt% sodium hydroxide solution containing 3 wt% sodium dodecyl sulfate.

### Examples 2-10 and Comparative Examples 1-2

The method for preparing hierarchical porous nickel electrodes is basically the same as in Example 1, except the parameters are different, which include the concentrations of the first and second alkaline solutions and the additives, the activation temperature and time, and the thickness of the nickel-aluminum coating.

### Example 11

The method for preparing hierarchical porous nickel electrodes is basically the same as in Example 1, with the only difference being that the nickel-aluminum coating is obtained through stepwise laser cladding. Specifically, it includes the following steps.
(1) Using laser cladding technology, NiAl alloy powder (Ni: Al = 8:2) is introduced into the laser beam. The laser power is 1600 W, the nitrogen protective gas flow is 5 L/min, the spot diameter is 4 mm, the scanning speed is 4 mm/s, and the powder feeding rate is 0.1 g/s. The aforementioned nickel mesh, which has been sandblasted, is subjected to the first alloy powder cladding to form a first coating. The NiAl alloy powder used in this step has a particle size of 5 µm and a D50 of 6 µm.
(2) NiAl alloy powder (Ni: Al = 6:4) with a particle size of 30 µm and a D50 of 40 µm is loaded into the laser cladding equipment. The laser power is 2000 W, the nitrogen protective gas flow is 8 L/min, the spot diameter is 6 mm, the scanning speed is 6 mm/s, and the powder feeding rate is 0.2 g/s. The second alloy powder is cladded at a distance of 120 mm from the nickel-based substrate surface to form a second coating.
(3) NiAl alloy powder with a particle size of 80 µm and D50 of 85 µm (Ni: Al = 4:6) is loaded into the laser cladding equipment, where laser power of 3000 W, nitrogen protective gas flow of 10 L/min, spot diameter of 4 mm, scanning speed of 10 mm/s, and powder feeding rate of 0.3 g/s. The third alloy powder is cladded at a distance of 130 mm from the nickel-based substrate surface to form a third coating.

### Comparative example 3

The preparation method of the homogeneous porous nickel electrode is basically the same as that in Example 1, with the only difference being that: The nickel-based substrate in comparative example 3 is activated only once with an alkaline solution of 30 wt% sodium hydroxide and 5 wt% sodium tartrate at an activation temperature of 80°C for 12 h.

### Comparative example 4

The preparation method of the homogeneous porous nickel electrode is basically the same as that in Example 1, with the only difference being that: The nickel-based substrate in comparative example 3 is activated only once with an alkaline solution of 20 wt% sodium hydroxide and 5 wt% sodium tartrate at an activation temperature of 80°C for 12 h.

The parameters of the methods for preparing the above examples and comparative examples can be found in the table below.

| Serial Number | NaOH Concentration(wt%) | Activation Time (h) | Temperature(°C) | Additives | Thickness of nickel-aluminum coating (µm) |
|---|---|---|---|---|---|
| Example 1 | 30 | 0.5 | 90 | 3 wt% SDS | 50 |
| | 18 | 8 | 60 | | |
| Example 2 | 30 | 1 | 90 | 3 wt% SDS | 50 |
| | 18 | 12 | 60 | | |
| Example 3 | 30 | 1 | 60 | 5 wt% sodium citrate | 45 |
| | 18 | 24 | 60 | | |
| Example 4 | 25 | 2 | 80 | 3 wt% SDBS | 45 |
| | 20 | 8 | 60 | | |
| Example 5 | 25 | 2 | 80 | 3 wt% SDBS | 45 |
| | 20 | 20 | 40 | | |
| Example 6 | 35 | 0.5 | 80 | 5 wt% sodium tartrate | 50 |
| | 22 | 16 | 40 | | |
| Example 7 | 35 | 0.5 | 80 | 5 wt% sodium tartrate | 40 |
| | 22 | 12 | 60 | | |
| Example 8 | 40 | 0.5 | 60 | 3 wt% SDS | 40 |
| | 22 | 12 | 60 | +2 wt% sodium tartrate | |
| Example 9 | 23 | 2 | 90 | 5 wt% sodium gluconate | 40 |
| | 17 | 24 | 60 | | |
| Example 10 | 30 | 1 | 80 | 3 wt% SDS | 45 |
| | 10 | 12 | 60 | | |
| Example 11 | 30 | 0.5 | 90 | 3 wt% SDS | 50 (stepwise cladding) |
| | 18 | 8 | 60 | | |
| Comparative Example 1 | 30 | 2 | 80 | 3 wt% SDS | 50 |
| | 18 | 4 | 60 | | |
| Comparative Example 2 | 30 | 2 | 40 | 3 wt% SDS | 50 |
| | 18 | 24 | 60 | | |
| Comparative Example 3 | 30 | 12 | 80 | 5 wt% sodium tartrate | 50 |
| Comparative Example 4 | 20 | 12 | 60 | 5 wt% sodium tartrate | 50 |

### Characterization Analysis

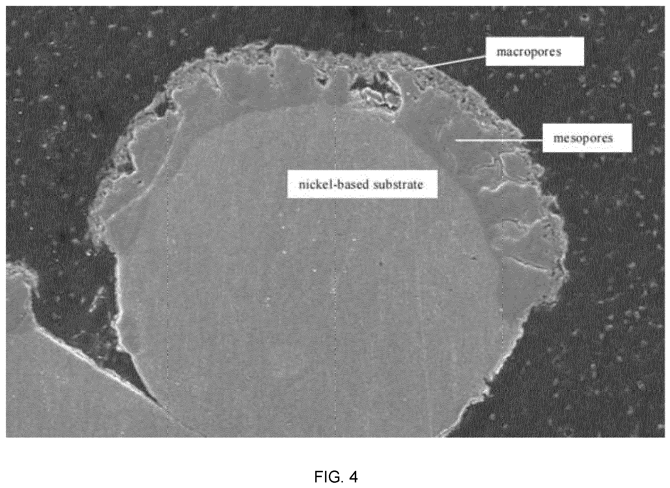

Surface and cross-sectional characterization analysis is performed on the hierarchical porous nickel electrode prepared in Example 2, and FIG. 3 and FIG. 4 are obtained. FIG. 3 is a surface SEM image of the hierarchical porous nickel electrode prepared in Example 2 of the present invention, magnified 2000 times; FIG. 4 is a cross-sectional SEM image of the hierarchical porous nickel electrode prepared in Example 2 of the present invention, magnified 1000 times.

As shown in FIG. 3 and FIG. 4, the hierarchical porous nickel electrode prepared in Example 2 has a hierarchical porous structure with macropores located in the outer layer and micropores located in the inner layer.

The above data show that an electrode with a hierarchical porous structure is successfully manufactured in Example 2.

### Electrochemical Performance Analysis

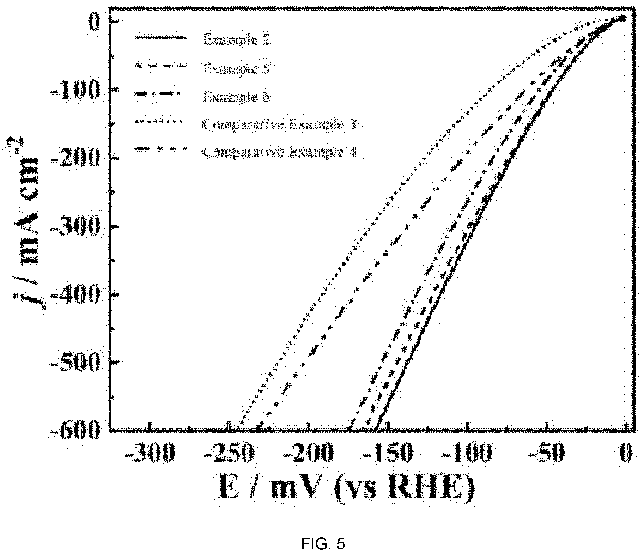

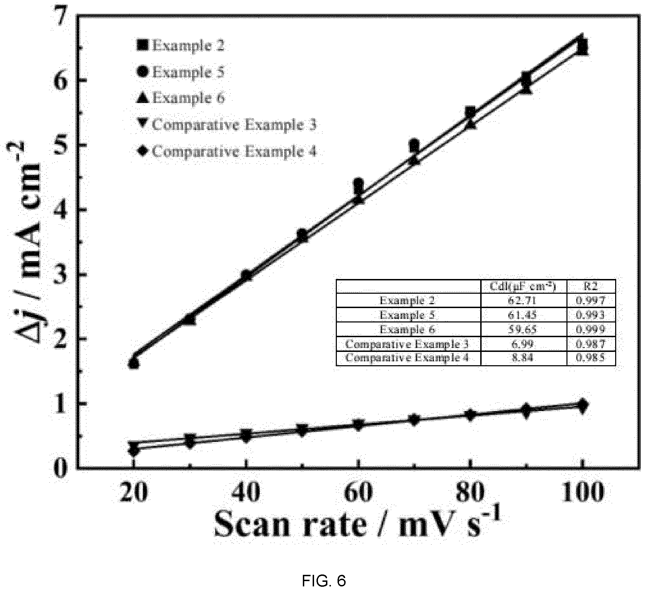

Using a electrochemical workstation and a saturated mercury reference electrode, the LSV curves of the electrodes prepared in Examples 1 to 11 and Comparative Examples 1 to 4 were tested in a 30 wt% KOH solution at 80°C. The overpotential was calculated at a current density of 500 mA/cm², and the double-layer capacitance of the electrodes prepared in Examples 1-11 and Comparative Examples 1 to 4 was calculated by varying the scan rate, yielding the data in the table below, FIG. 5, and FIG. 6. FIG. 5 shows a LSV curves of the electrodes prepared in Examples 2, 5, and 6 of the present invention and Comparative Examples 3 and 4. FIG. 6 shows a double-layer capacitance curve of the electrode prepared in Examples 2, 5, and 6 of the present invention and Comparative Examples 3 and 4.

| Serial Number | -500mA cm⁻² Overpotential (mV) | Double-layer capacitance(µF cm⁻²) |
|---|---|---|
| Example 1 | -143 | 61.57 |
| Example 2 | -138 | 62.71 |
| Example 3 | -146 | 61.04 |
| Example 4 | -149 | 60.63 |
| Example 5 | -144 | 61.45 |
| Example 6 | -152 | 59.65 |
| Example 7 | -156 | 58.97 |
| Example 8 | -159 | 58.21 |
| Example 9 | -158 | 58.35 |
| Example 10 | -178 | 50.86 |
| Example 11 | -150 | 61.39 |
| Comparative Example 1 | -195 | 46.73 |
| Comparative Example 2 | -186 | 48.46 |
| Comparative Example 3 | -290 | 6.99 |
| Comparative Example 4 | -255 | 8.84 |

As shown in FIG. 5, the hierarchical porous nickel electrodes prepared in Examples 2, 5, and 6 have significantly lower overpotentials and more excellent catalytic performance compared to the homogeneous porous nickel electrodes of Comparative Examples 3 and 4.

As shown in the data in the table above, the overpotential of the hierarchical porous nickel electrodes prepared in Examples 1-11 at -500 mA/cm² was significantly lower than that of Comparative Examples 1-4, with the hierarchical porous nickel electrode of Example 2 having an overpotential as low as -138 mV, which is a 52.4% reduction in overpotential with respect to the homogeneous porous nickel electrode of Comparative Example 4.

In addition, the construction of microporous structure in Comparative Example 1 was affected due to the short activation time of the second activation, thus affecting the catalytic performance. The construction of macroporous structure was affected in Comparative Example 2 due to the low temperature of the first activation, thus affecting the catalytic performance.

The electrochemically active area (ECSA) is proportional to the double-layer capacitance, and as shown in FIG. 6, the hierarchical porous nickel electrodes prepared in Examples 2, 5, and 6 show a significant increase in the double-layer capacitance with respect to the homogeneous porous nickel electrodes of Comparative Examples 3 and 4.

As shown in the data in the table above, the double-layer capacitance of the hierarchical porous nickel electrodes prepared in Examples 1-11 is significantly higher than that of Comparative Examples 1 to 4. The double-layer capacitance of the electrode of Example 2 reaches 62.71 µF/cm², which is 8.97 times higher than that of the homogeneous porous nickel electrode of Comparative Example 3.

From the above data, it can be seen that the hierarchical porous nickel electrode of the present invention has a higher active area and stronger catalytic performance relative to the conventional homogeneous porous nickel electrode, which can help to reduce the overpotential of the alkaline electrolytic water reaction and improve the hydrogen reaction rate.

### Stability Analysis

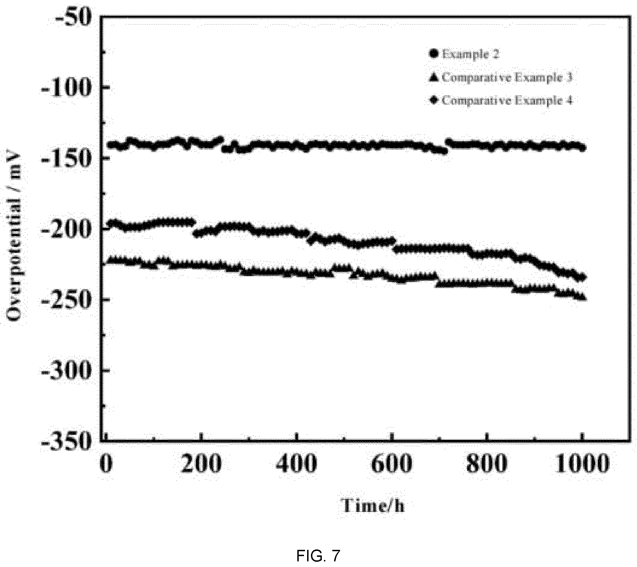

The stability in -500 mA/cm² current density of the electrodes prepared in Examples 1-11 and Comparative Examples 1-4 was tested under the same test conditions as in electrochemical performance analysis, and the data in the table below and FIG. 7 were obtained. FIG. 7 shows the stability test curves of the electrodes prepared in Example 2 and Comparative Examples 3 and 4.

| Serial Number | Overpotential at constant current of -500mA cm⁻²⁽mV) | | |
|---|---|---|---|
| | After 100 h | After 500 h | After 1000 h |
| Example 1 | -145 | -145 | -148 |
| Example 2 | -142 | -140 | -142 |
| Example 3 | -149 | -150 | -153 |
| Example 4 | -152 | -153 | -155 |
| Example 5 | -146 | -148 | -151 |
| Example 6 | -153 | -155 | -156 |
| Example 7 | -158 | -160 | -161 |
| Example 8 | -163 | -165 | -162 |
| Example 9 | -159 | -161 | -163 |
| Example 10 | -181 | -184 | -188 |
| Example 11 | -153 | -157 | -163 |
| Comparative Example 1 | -199 | -202 | -203 |
| Comparative Example 2 | -191 | -195 | -200 |
| Comparative Example 3 | -296 | -298 | -318 |
| Comparative Example 4 | -251 | -263 | -288 |

As shown in FIG. 7, the overpotentials of the hierarchical porous nickel electrodes prepared in Examples 2, 5, and 6 remained stable under 1000 h, and the catalytic performance was stable; however, the overpotentials of the homogeneous porous nickel electrodes prepared in the Comparative Examples 3 and 4 significantly increased under prolonged use, and the catalytic performance was reduced.

As shown in the data in the above table, the overpotentials of the hierarchical porous nickel electrodes prepared in Examples 1-11 were basically unchanged after 1000 h, while the overpotentials of the homogeneous porous nickel electrodes prepared in Comparative Examples 3-4 were significantly increased.

As can be seen from the above data, the hierarchical porous nickel electrode prepared in the present invention has good stability and long service life.

It is apparent to those skilled in the art that the present invention is not limited to the details of the exemplary embodiments described above, and that it is capable of realizing the present invention in other specific forms without departing from the spirit or essential features of the present invention. Accordingly, the embodiments are to be regarded as exemplary and nonlimiting in every point of view, and the scope of the present invention is limited by the appended claims and not by the foregoing description, and is therefore intended to encompass all variations falling within the meaning and scope of the equivalent elements of the claims. Any accompanying markings in the claims should not be regarded as limiting the claims involved.

In addition, it should be understood that although the specification is described in accordance with the embodiments, not each embodiment contains only one independent technical solution, and the specification is recited in such a manner only for the sake of clarity, and the person skilled in the art should take the specification as a whole, and the technical solutions in the embodiments may be combined appropriately to form other embodiments that can be understood by the person skilled in the art.

## Claims

1. A method for preparing a hierarchical porous nickel electrode, comprising the following steps:
spraying a nickel-aluminum material on a nickel substrate to prepare a nickel-aluminum coating on the surface of the nickel substrate, so as to obtain a first intermediate product, the first intermediate product including the nickel substrate and the nickel-aluminum coating; heat-treating the first intermediate product, to obtain a second intermediate product; and
placing the second intermediate product into alkaline solutions of different concentrations sequentially for stepwise activation, to obtain a hierarchical porous nickel electrode;
wherein in the stepwise activation, the concentrations of the alkaline solution are gradually decreased, and activation temperatures are gradually decreased.

2. The method as claimed in claim 1, wherein the stepwise activation comprises:
placing the second intermediate product in a first alkaline solution for a first activation, to obtain a third intermediate product; and
placing the third intermediate product in a second alkaline solution for a second activation, to obtain a hierarchical porous nickel electrode;
wherein a concentration of the first alkaline solution is greater than a concentration of the second alkaline solution, and an activation temperature of the first activation is higher than an activation temperature of the second activation.

3. The method as claimed in claim 2, wherein the first alkaline solution comprises 23~40 wt% NaOH solution, the activation temperature of the first activation is 60~100°C, and an activation time is 0~2 h;
the second alkaline solution comprises 4~22 wt% NaOH solution, the activation temperature of the second activation is 30~60°C, and an activation time is 8~24 h.

4. The method as claimed in claim 3, wherein each of the first alkaline solution and the second alkaline solution further comprises 1 to 8 wt% of an additive, the additive selected from the group of sodium dodecyl sulfate, sodium dodecyl benzene sulfonate, sodium gluconate, sodium citrate, sodium tartrate, and combinations thereof.

5. The method as claimed in claim 1, wherein the step of spraying a nickel-aluminum material on a nickel substrate comprises:
adopting a plasma spraying process to spray a nickel-aluminum material on the nickel substrate with nickel-clad aluminum powder as a spraying powder.

6. The method as claimed in claim 1, wherein the step of spraying a nickel-aluminum material on a nickel substrate comprises:
(i) cladding a first alloy powder on a surface of the nickel substrate;
(ii) cladding a second alloy powder on a surface of a product of step (i);
(iii) cladding a third alloy powder on a surface of a product of step (ii);
wherein the first alloy powder, the second alloy powder and the third alloy powder are NiAl alloy powder; a mass ratio of Ni and Al in said NiAl alloy powder is (1~9) : (1~9); a particle size of the first alloy powder is 1~10 µm, a particle size of the second alloy powder is 10~50 µm, a particle size of the third alloy powder is 50~100 µm; the first alloy powder is made of micrometer particles of a smaller size, the second alloy powder is made of secondary micrometer particles, and the third alloy powder is made of micrometer particles of a larger size as compared to the second alloy powder..

7. The method as claimed in claim 6, wherein a D50 of the first alloy powder is 3~8 µm, a D50 of the second alloy powder is 25~50 µm, and a D50 of the third alloy powder is 75~110 µm.

8. The method as claimed in claim 6, wherein the cladding is laser cladding, in step (i), a power of laser cladding is 800~2000 W, a flow rate of a nitrogen protective gas is 5~10 L/min, a spot diameter is 4 mm, a scanning speed is 4 mm/s, and a powder feeding rate is 0.05~0.3 g/s;
in step (ii), a power of laser cladding is 1000~2000W, a flow rate of a nitrogen protective gas is 5~10 L/min, a spot diameter is 6 mm, a scanning speed is 6 mm/s, and a powder feeding rate is 0.05~0.3 g/s;
in step (iii), a power of laser cladding is 1000~3000 W, a flow rate of a nitrogen protective gas is 5~10 L/min, a spot diameter is 4 mm, a scanning speed is 10 mm/s, a powder feeding rate is 0.05~0.3 g/s.

9. The method as claimed in claim 1, wherein a thickness of the nickel-aluminum coating is 40-50 µm.

10. The method as claimed in claim 1, before the step of spraying a nickel-aluminum material on a nickel substrate, further comprising roughing up a surface of the nickel substrate using a sandblasting process.

11. The method as claimed in claim 1, wherein the step of heat-treating the first intermediate product comprises: placing the first intermediate product in a hydrogen atmosphere and heat treating it at 550-650°C for 1~2 h, then the first intermediate product is cooled to room temperature at a rate of 3~5 °C/min.

12. A hierarchical porous nickel electrode obtained by using the method as claimed in any one of claims 1 to 11.

13. An application of the hierarchical porous nickel electrode as claimed in claim 12 as a hydrogen precipitation electrode in an alkaline electrolytic water reaction.
